# EUROPÄISCHE PATENTSCHRIFT

(11) **EP 4 009 841 B1**
(45) Veröffentlichungstag und Bekanntmachung des Hinweises auf die Patenterteilung: **14.09.2022**
(21) Anmeldenummer: 20804163.2
(22) Anmeldetag: 04.11.2020
(51) Int. Cl.: A47J 42/04, A47J 42/10

(54) **GEWÜRZMAHLWERKSTEIL SOWIE HERSTELLVERFAHREN FÜR EIN GEWÜRZMAHLWERKSTEIL**
SPICE MILL PART AND METHOD FOR PRODUCING A SPICE MILL PART
PIÈCE DE MOULIN À ÉPICES ET PROCÉDÉ DE FABRICATION D'UNE PIÈCE DE MOULIN À ÉPICES

(30) Priorität: 04.11.2019 AT 509392019
(43) Veröffentlichungstag der Anmeldung: 15.06.2022
(73) Patentinhaber: Joma Kunststofftechnik GmbH, 2345 Brunn am Gebirge (AT)
(72) Erfinder: FRIES, Rudolf, 2572 Kaumberg (AT)
(74) Vertreter: SONN Patentanwälte OG
(86) Internationale Anmeldenummer: PCT/AT2020/060385
(87) Internationale Veröffentlichungsnummer: WO 2021/087537

(56) Entgegenhaltungen:
- WO-A1-2016/207740
- DE-U1-202007 001 563

## Beschreibung

Die Erfindung betrifft ein Gewürzmahlwerksteil, insbesondere ein Gewürzmahlwerksunterteil, für ein Gewürzmahlwerk, mit einem Gehäuse, welches zumindest teilweise aus einem Kunststoffmaterial besteht und mit einem weiteren Gewürzmahlwerksteil, insbesondere einem Gewürzmahlwerksoberteil, drehbar verbindbar ist, wobei an dem Gehäuse ein Aufnahmeelement vorgesehen ist, in welchem ein Mahlelement, insbesondere ein Mahlring, aus einem Keramikmaterial angeordnet ist. Des Weiteren betrifft die Erfindung ein Gewürzmahlwerk und eine Gewürzmühle, jeweils mit einem solchen Gewürzmahlwerksteil, sowie ein Verfahren zur Herstellung des Gewürzmahlwerksteils.

Gattungsgemäße Gewürzmahlwerke weisen üblicherweise einen Gewürzmahlwerksunterteil und einen Gewürzmahlwerksoberteil bzw. einen Rotor und einen Stator auf, die beide mit Mahlelementen zum Zermahlen von Gewürzen versehen sind, wobei in der Regel der Gewürzmahlwerksoberteil gegenüber dem mit einem Gewürzbehälter verbundenen Gewürzmahlwerksunterteil drehbar gelagert ist. Durch Drehung des Gewürzmahlwerksoberteils gegenüber dem Gewürzmahlwerksunterteil werden die Mahlelemente relativ zueinander in Drehung versetzt und dadurch das Gewürz in einem Mahlspalt zwischen den Mahlelementen zermahlen.

Gewürzmahlwerksteile bzw. Gewürzmahlwerke der eingangs erwähnten Art sind unter anderem aus der DE 10 2015 121 237 B4 oder der DE 10 2016 106 597 B4 bekannt.

Weitere Gewürzmahlwerke sind aus WO 2016/207740 A1,
DE 20 2007 001 563 U1, CN 107041695 A und JP H04135462 A bekannt.

Typischerweise werden Gehäuse von Gewürzmahlwerksteilen in einem Kunststoffspritzgussverfahren hergestellt. Sofern ein Keramikmahlelement vorgesehen ist, wird dieses gesondert von der Herstellung des Gehäuses in einem separaten Herstellungsprozess gefertigt und danach in ein Aufnahmeelement des Gehäuses eingesetzt. Nachteiligerweise haben insbesondere Keramikteile vergleichsweise große Fertigungstoleranzen, sodass bei üblichen Mahlwerksgrößen der Außendurchmesser des Mahlelements häufig um ca. 0,5 bis 0,8 mm schwanken kann. Um dennoch zu gewährleisten, dass das Mahlelement zuverlässig in das Aufnahmeelement eingesetzt werden kann, ist der Innendurchmesser des Aufnahmeelements üblicherweise derart ausgelegt, dass selbst Mahlelemente mit dem Größtmaß innerhalb des Toleranzbereichs noch einfach in das Aufnahmeelement eingesetzt werden können. Dies führt dazu, dass der Außendurchmesser des Keramikteils jedenfalls kleiner als der Innendurchmesser des Aufnahmeelements ist und somit der Keramikteil schwimmend im Aufnahmeelement gelagert ist. Nachteiligerweise tritt zudem oftmals das Problem auf, dass bei der Herstellung der Mahlelemente sehr feine und daher nicht sichtbare Haarrisse in den Mahlelementen auftreten können, welche bei der Verwendung des Gewürzmahlwerksteils aufgrund der von innen nach außen wirkenden Druckkräfte bei einem Mahlvorgang und der schwimmenden Lagerung des Mahlelements sodann zu einem Bruch oder zu Absplitterungen von Teilen des Mahlelements führen können. Ein Bruch eines Mahlelements kann im ungünstigsten Fall zu einem vollständigen Defekt des Gewürzmahlwerks führen. Bei Absplitterungen können die abgesplitterten Teile des Mahlelements gemeinsam mit den gemahlenen Gewürzen auf Speisen gelangen und daher eine Gefahr darstellen. Meist treten Brüche und Absplitterungen bei Mahlringen im Gewürzmahlwerksunterteil auf.

In Anbetracht der obigen Ausführungen ist es Aufgabe der vorliegenden Erfindung, die Nachteile des Standes der Technik zu lindern oder gar gänzlich zu beseitigen. Insbesondere ist es Aufgabe der Erfindung, einen Gewürzmahlwerksteil der eingangs erwähnten Art bereitzustellen, bei dem das Risiko eines Bruches oder einer Absplitterung des Mahlelements reduziert oder gänzlich vermieden wird.

Gelöst wird diese Aufgabe durch ein Gewürzmahlwerksteil mit den Merkmalen des Anspruchs 1.

Demnach ist erfindungsgemäß vorgesehen, dass das Mahlelement kraftschlüssig durch eine im Wesentlichen radial nach innen gerichtete und auf eine in sich geschlossene äußere Anlagefläche des Mahlelements wirkende Druckkraft in dem Aufnahmeelement eingespannt ist, wobei die Druckkraft im Wesentlichen entlang des gesamten Umfangs auf die äußere Anlagefläche des Mahlelements wirkt. Vorteilhafterweise wird durch die nach innen gerichtete und auf die äußere Anlagefläche wirkende Druckkraft vorzugsweise eine im Wesentlichen vollflächige Anlage zwischen der äußeren Anlagefläche des Mahlelements und einer inneren Anlagefläche des Aufnahmeelements erzielt, sodass während eines Mahlvorgangs von innen auf das Mahlelement wirkende Druckkräfte großflächig an das Aufnahmeelement übertragen werden und somit das Risiko einer Ausbreitung von Haarrissen verringert wird und dadurch die Gefahr von Folgeschäden wie Brüche oder Absplitterungen erheblich reduziert wird. Durch die kraftschlüssige Einspannung des Mahlelements im Gewürzmahlwerksteil werden zudem unbeabsichtigte Verschiebungen desselben vermieden, wodurch die Gefahr von anderen Defekten des Gewürzmahlwerks, wie beispielsweise Verkeilungen von zueinander verdrehbaren Mahlelementen, weiter verringert werden kann. Der Kraftschluss zwischen dem Mahlelement und dem Aufnahmeelement kann insbesondere dadurch erzeugt werden, indem der (Soll-)Innenumfang des Aufnahmeelements bei seiner Herstellung, also im uneingefügten Zustand des Mahlelements, kleiner ist als der (Soll-)Außenumfang des Mahlelements. Mit anderen Worten besitzt das Aufnahmeelement einen (Soll-)Innendurchmesser bei seiner Herstellung, der kleiner ist als ein (Soll-)Außendurchmesser des Mahlelements. Vorzugsweise ist der (Soll-)Innendurchmesser des Aufnahmeelements zumindest um 0,01 mm, noch mehr bevorzugt 0,1 mm, kleiner als der (Soll-)Außendurchmesser des Mahlelements. Der Zusatz "(Soll-)" soll verdeutlichen, dass bei der Herstellung des Gewürzmahlwerksteils Toleranzen auftreten. Wenn nachfolgend auf Maßangaben Bezug genommen wird, wird - sofern nicht anders bestimmt - jeweils auf das Sollmaß Bezug genommen. Dadurch ist das Mahlelement im zusammengesetzten Zustand des Gewürzmahlwerksteils in das Aufnahmeelement eingepresst. Die Einpressung bzw. Einspannung des Mahlelements findet im Wesentlichen entlang des gesamten Umfangs der äußeren Anlagefläche statt. Eine innere Anlagefläche des Aufnahmeelements drückt dabei auf die äußere Anlagefläche des Mahlelements. Im Vergleich dazu liegt beim Stand der Technik regelmäßig kein Kraftschluss, sondern lediglich zur Verdrehsicherung ein Formschluss zwischen dem Mahlelement und dem Aufnahmeelement vor. Die Druckkraft auf die äußere Anlagefläche des Mahlelements wird dabei vorzugsweise von einer Wandung des Aufnahmeelements erzeugt. Die Wandung des Aufnahmeelements kann insbesondere im Wesentlichen zylindermantelförmig ausgebildet sein. Die innere Anlagefläche des Aufnahmeelements ist vorzugsweise im Wesentlichen rund. Auch ist die äußere Anlagefläche des Mahlelements vorzugsweise im Wesentlichen rund. Um das Mahlelement aufzunehmen, kann das Aufnahmeelement an einem oberen Randbereich eine insbesondere im Wesentlichen kreisrunde Einführöffnung aufweisen. Erfindungsgemäß wirkt die Druckkraft im Wesentlichen entlang des gesamten Umfangs auf die äußere Anlagefläche. Das Aufnahmeelement kann jedoch eine oder mehrere Spreizöffnungen aufweisen, welche das Einführen des Mahlelements erleichtern können. Das Aufnahmeelement kann dann an der Stelle der Spreizöffnungen freilich keine nach innen gerichtete Druckkraft ausüben. Die Druckkraft kann zumindest auf die Hälfte, insbesondere zumindest auf zwei Drittel oder zumindest drei Viertel, der äußeren Anlagefläche des Mahlelements ausgeübt werden. Das Gehäuse besteht zumindest teilweise aus einem Kunststoffmaterial und kann beispielsweise durch ein Kunststoffspritzgussverfahren hergestellt worden sein. Im Zusammenhang mit Druckkraft bedeutet "nach innen" zu einer zentralen Längsachse des Gewürzmahlwerksteils, welche auch mit der Drehachse des Gewürzmahlwerks zusammenfallen kann, hin. Wenn es sich bei dem Mahlelement beispielsweise um einen Mahlring handelt, ist es vorteilhaft, wenn die Druckkraft radial nach innen gerichtet ist. Ein Mahlring besitzt eine im Wesentlichen kreisrunde äußere Anlagefläche und weist an einer Innenseite Mahlvorsprünge auf. Das Gewürzmahlwerksteil, welches insbesondere als Gewürzmahlwerksunterteil ausgebildet ist, ist vorzugsweise über eine Schnappverbindung mit einem weiteren Gewürzmahlwerksteil, insbesondere einem Gewürzmahlwerksoberteil, drehbar verbunden. Der weitere Gewürzmahlwerksteil kann ein weiteres Mahlelement, insbesondere einen Mahlkonus mit Mahlvorsprüngen an einer Außenfläche, aufweisen. Dabei können die Gewürzmahlwerksteile derart miteinander verbunden sein, dass das weitere Mahlelement in das Mahlelement zumindest teilweise eingefügt ist, sodass zwischen den beiden Mahlelementen ein Mahlspalt entsteht, in welchem das Gewürz zermahlen werden kann. Vorzugsweise liegt die innere Anlagefläche des Aufnahmeelements im Wesentlichen entlang des gesamten Umfangs des Mahlelements bis auf allfällige Vorsprünge des Mahlelements direkt und unmittelbar an der äußeren Anlagefläche des Mahlelements an.

Für die Zwecke dieser Offenbarung beziehen sich Richtungsangaben wie "oben", "unten", "innen" und "außen" auf eine Ruhestellung, in welcher das Gewürzmahlwerksteil bzw. das Gewürzmahlwerk üblicherweise mit einem Gewürzbehälter verbunden ist, und der Gewürzbehälter auf der der Aufnahmeöffnung gegenüberliegenden Bodenfläche aufgestellt ist.

Um bei der Fertigstellung des Gewürzmahlwerksteils das Einführen des Mahlelements in das Aufnahmeelement zu erleichtern, kann das Aufnahmeelement zumindest eine, vorzugsweise zwei insbesondere gegenüberliegende, Spreizausnehmung/n zum zumindest teilweisen Aufspreizen des Aufnahmeelements aufweisen. Mit Hilfe der Spreizausnehmungen kann das Aufnahmeelement leichter aufgespreizt, d.h. im Durchmesser erweitert werden, um das Mahlelement einzuführen. Das Aufspreizen kann mittels Krafteinwirkung erfolgen. Nachdem die Krafteinwirkung beendet wird, trachtet das Aufnahmeelement aufgrund der Rückstellkraft des Materials danach zur ursprünglichen Ausgangsform zurückzukehren. Wenn zwischenzeitlich das Mahlelement in das Aufnahmeelement eingefügt worden ist, übt das Aufnahmeelement von nun an die Druckkraft auf das Mahlelement aus. Die Spreizausnehmung kann beispielsweise als Schlitz, Einschnitt, Öffnung oder Kerbe ausgebildet sein. Vorzugsweise erstreckt sich die Spreizausnehmung von einem oberen Rand des Aufnahmeelements und insbesondere parallel zur zentralen Längsachse in Richtung eines unteren Randes des Aufnahmeelements.

Um das Einführen des Mahlelements in das Aufnahmeelement zu erleichtern, kann aus produktionstechnischen Gründen insbesondere vorgesehen sein, dass das Aufnahmeelement an der inneren Anlagefläche eine insbesondere umlaufende Abstufung aufweist. Durch die Abstufung können zwei Bereiche mit voneinander verschiedenen Innendurchmessern geschaffen werden. Vorzugsweise entsteht durch die Abstufung ein Aufnahmeelement mit einem oberen, an der Einführöffnung des Aufnahmeelements liegenden Bereich und einem unteren Bereich, wobei der untere Bereich einen kleineren Innendurchmesser aufweist als der obere Bereich. Vorzugsweise ist der Innendurchmesser des oberen Bereichs des Aufnahmeelements zumindest 0,1 mm, noch mehr bevorzugt zumindest 0,5 mm, größer als der Innendurchmesser des unteren Bereichs des Aufnahmeelements.

Entsprechend kann die äußere Anlagefläche des Mahlelements eine insbesondere umlaufende Abstufung besitzen. Durch die umlaufende Abstufung wird die äußere Anlagefläche ebenfalls in einen oberen und einen unteren Bereich geteilt, wobei der untere Bereich vorzugsweise einen geringeren Außendurchmesser aufweist als der obere Bereich. Vorzugsweise ist der Außendurchmesser des oberen Bereichs des Mahlelements zumindest 0,1 mm, noch mehr bevorzugt zumindest 0,5 mm, größer als der Außendurchmesser des unteren Bereichs des Mahlelements. Somit kann das Mahlelement zunächst einmal mit einem kleineren Durchmesser, der im Wesentlichen dem Innendurchmesser im unteren Bereich des Aufnahmeelements entspricht, in den Aufnahmebereich größeren Durchmessers ohne Aufbringung einer Druckkraft eingelegt werden, bevor die beiden lose ineinandergefügten Teile einer Presse zugeführt werden, in welcher in der Regel eine Mehrzahl an Mahlelementen mit der erforderlichen Druckkraft in das jeweilige Aufnahmeelement eingepresst wird, sodass der Abschnitt des Mahlelements mit geringerem Durchmesser von dem Abschnitt des Aufnahmeelements mit geringerem Durchmesser umgeben ist und der Abschnitt des Mahlelements mit größerem Durchmesser von dem Abschnitt des Aufnahmeelements mit größerem Durchmesser.

Vorteilhaft ist, wenn das Mahlelement an der äußeren Anlagefläche zumindest einen sich vorzugsweise über die gesamte Höhe der äußeren Anlagefläche erstreckenden Vorsprung aufweist. Der Vorsprung kann zugleich mehreren Zwecken dienen. Zum einen ist das Mahlelement in diesem Bereich verdickt bzw. verstärkt, um die Bruchgefahr zu reduzieren. Zum anderen kann der Vorsprung zur Verdrehsicherung dienen. Zu diesem Zweck kann der Vorsprung, wenn eine Spreizausnehmung des Aufnahmeelements vorgesehen ist, in diese zumindest teilweise aufgenommen sein. Weiters kann das Mahlelement an einem oberen Rand auch einen oberen Kragen aufweisen. Der Kragen liegt am oberen Rand des Aufnahmeelements, genauer an der Einführöffnung an und gibt somit vor, wie weit das Mahlelement in das Aufnahmeelement eindringen kann. Der Kragen kann auch mit Blockierelementen des Aufnahmeelements zusammenwirken, sodass eine Verdrehsicherung des Mahlelements im Aufnahmeelement entsteht. Zu diesem Zweck kann der Kragen auch abgeflachte Abschnitte oder Ausnehmungen aufweisen, die mit den Blockierelementen des Aufnahmeelements zusammenwirken.

In einer Ausführungsform des Gewürzmahlwerksteils ist vorgesehen, dass der Vorsprung im Wesentlichen die gleiche Kontur aufweist, wie die Spreizausnehmung, und vorzugsweise der Vorsprung im Wesentlichen entsprechend eines oberen Kragens von der äußeren Anlagefläche vorsteht.

Um einerseits ein Einführen des Mahlelements in das Aufnahmeelement zu ermöglichen, ohne das Aufnahmeelement zu zerstören, und andererseits eine geeignete Druckkraft zu erzeugen, die Haarrisse bzw. deren Ausbreitung verhindern kann, hat sich gezeigt, dass es günstig ist, wenn der Solldurchmesser der inneren Anlagefläche des Aufnahmeelements bei seiner Herstellung derart gewählt ist, dass er zwischen 1 % und 3 %, bevorzugt zwischen 1,5 % und 2,5 %, noch mehr bevorzugt im Wesentlichen 2 % kleiner ist als der Solldurchmesser der äußeren Anlagefläche des Mahlelements.

Um über den gesamten Umfang möglichst eine flächige Anlage zwischen äußerer Anlagefläche des Mahlelements und innerer Anlagefläche des Aufnahmeelements zu erzielen, ist es vorteilhaft, wenn unter Berücksichtigung der Fertigungstoleranzen von Aufnahmeelement und Mahlelement der größtmögliche Innendurchmesser der inneren Anlagefläche des Aufnahmeelements im Wesentlichen dem kleinstmöglichen Außendurchmesser der äußeren Anlagefläche des Mahlelements entspricht. Demnach ist auch im Falle von ungünstig zusammenfallenden Fertigungsabweichungen eines Aufnahmeelements und eines Mahlelements (Außendurchmesser des Mahlelements klein, Innendurchmesser des Aufnahmeelements groß) eine Presspassung sichergestellt.

In einer bevorzugten Ausführungsform ist vorgesehen, dass das Aufnahmeelement an der Innenseite einen Abstützvorsprung für das Mahlelement ausbildet, welcher sich im Wesentlichen senkrecht zu der Innenseite des Aufnahmeelements radial nach innen erstreckt. Der Abstützvorsprung kann einerseits als Aufliegefläche für das Mahlelement dienen und/oder andererseits, wenn das Gewürzmahlwerksteil mit einem weiteren Gewürzmahlwerksteil verbunden ist, ein zu tiefes Eindringen des weiteren Mahlelements in das Aufnahmeelement blockieren.

Bevorzugt ist, wenn das Gehäuse aus Polyoxymethylene, Polycarbonat, Polypropylen, ABS (Acrylnitril-Butadien-Styrol-Copolymere), Polymethylmethacrylat, Polyethylen, Polyolefine und/oder Biopolymere besteht.

Um ein das Gewürzmahlwerksteil mit einem Gewürzbehälter verbinden zu können, ist es vorteilhaft, wenn ein Gewinde zur Verbindung mit einem Gewürzbehälter vorgesehen ist.

Damit eine Verbindung mit einem weiteren Gewürzmahlwerksteil drehbar verbunden werden kann, ist es vorteilhaft, wenn ein vorzugsweise umlaufender Schnappvorsprung zur Verbindung mit dem weiteren Gewürzmahlwerksteil vorgesehen ist. Der Schnappvorsprung kann mit einem weiteren Schnappvorsprung des weiteren Gewürzmahlwerksteils verschnappt werden, sodass ein unbeabsichtigtes Lösen des weiteren Gewürzmahlwerksteils vom Gewürzmahlwerksteil verhindert wird, eine Verdrehung der beiden Gewürzmahlwerksteile relativ zueinander jedoch ermöglicht wird.

Eine Weiterbildung der Erfindung betrifft ein Gewürzmahlwerk für eine Gewürzmühle, wobei ein Gewürzmahlwerksunterteil gemäß obigen Ausführungen vorgesehen ist, welches über eine Schnappverbindung mit einem Gewürzmahlwerksoberteil drehbar verbunden ist, wobei das Gewürzmahlwerksoberteil ein weiteres Mahlelement, insbesondere einen Mahlkonus, aufweist. Das Gewürzmahlwerk kann über ein Gewinde mit einem Gewürzbehälter verbunden sein. Das unvermahlene Gewürz kann über eine Eingangsseite in das Gewürzmahlwerk gelangen, in einem zwischen den beiden Mahlelementen gebildeten Mahlspalt durch Drehung zermahlen werden und auf einer Ausgangsseite aus dem Gewürzmahlwerk austreten.

In einer Weiterbildung umfasst die Erfindung auch eine Gewürzmühle mit einem Gewürzbehälter und einem Gewürzmahlwerk der oben beschriebenen Art. Der Gewürzbehälter ist vorzugsweise über ein Gewinde mit dem Gewürzmahlwerk verbunden.

Des Weiteren betrifft die Erfindung ein Verfahren zur Herstellung eines Gewürzmahlwerksteils, insbesondere eines Gewürzmahlwerksunterteil, wie oben beschrieben. Das erfindungsgemäße Verfahren umfasst dabei die folgenden Schritte:
- Herstellen eines Mahlelements, insbesondere eines Mahlringes, bestehend aus einem Keramikmaterial;
- Herstellen eines Gehäuses mit einem Aufnahmeelement für das Mahlelement durch ein Kunststoffspritzgießverfahren;
- Einfügen des Mahlelements in das Aufnahmeelement, sodass das Mahlelement kraftschlüssig durch eine im Wesentlichen radial nach innen gerichtete und auf eine in sich geschlossene äußere Anlagefläche des Mahlelements wirkende Druckkraft in dem Aufnahmeelement eingespannt ist.

Hinsichtlich der Vorteile und Merkmale des Gewürzmahlwerksteils wird auf die obigen Ausführungen verwiesen. Das Mahlelement wird in einem von der Herstellung des Gehäuses unabhängigen Herstellungsprozess erzeugt. Zum Einfügen des Mahlelements in das Aufnahmeelement existieren mehrere Möglichkeiten.

Gemäß einer ersten Ausführung wird das Mahlelement in das Aufnahmeelement eingefügt, bevor das Aufnahmeelement auf Raumtemperatur abgekühlt ist. Als Raumtemperatur wird in diesem Zusammenhang eine Temperatur von 25°C bezeichnet. Besonders günstig ist, wenn das Mahlelement in das Aufnahmeelement eingefügt wird, wenn das Gehäuse (noch) eine Temperatur von zumindest 35 °C aufweist. Dies deshalb, weil das Material einerseits (noch) verformbar ist und andererseits der Schwund des Materials, welcher später die Druckkraft auf das Mahlelement erzeugt bzw. verstärkt, noch nicht (so stark) eingesetzt hat. In Bezug auf den Herstellungsprozess ist günstig, wenn das Mahlelement innerhalb von 180 Sekunden nach der Entnahme des Gehäuses aus einem Spritzgusswerkzeug in das Aufnahmeelement eingefügt wird.

Um das Einfügen des Mahlelements von der Temperatur bzw. dem Herstellungsprozess des Gehäuses zeitlich unabhängig zu machen, ist es günstig, wenn das Aufnahmeelement zumindest eine Spreizausnehmung aufweist und das Aufnahmeelement zum Einfügen des Mahlelements aufgespreizt wird. Durch die Spreizausnehmung kann der Innendurchmesser des Aufnahmeelements erweitert und dadurch das Mahlelement eingefügt werden. Dieser Vorgang kann auch bei Raumtemperatur erfolgen.

Im Folgenden wird die Erfindung an Hand von Figuren näher erläutert, auf die sie jedoch nicht beschränkt sein soll:
Fig. 1 zeigt ein Mahlelement in Form eines Mahlringes gemäß einer ersten Ausführungsform;
Fig. 2 zeigt eine Draufsicht auf einen Gewürzmahlwerksteil gemäß einer ersten Ausführungsform mit einem Mahlring;
Fig. 3 zeigt einen Querschnitt des Gewürzmahlwerksteils entlang der Schnittebene III-III aus Fig. 2;
Fig. 4 zeigt einen Querschnitt des Gewürzmahlwerksteils entlang der Schnittebene IV-IV aus Fig. 2;
Fig. 5 zeigt eine Seitenansicht eines Gewürzmahlwerksteils gemäß der ersten Ausführungsform;
Fig. 6 zeigt ein Mahlelement in Form eines Mahlringes gemäß einer zweiten Ausführungsform;
Fig. 7 zeigt eine Draufsicht auf einen Gewürzmahlwerksteil gemäß einer zweiten Ausführungsform mit einem Mahlring;
Fig. 8 zeigt einen Querschnitt des Gewürzmahlwerksteils entlang der Schnittebene VIII-VIII aus Fig. 7;
Fig. 9 zeigt einen Querschnitt des Gewürzmahlwerksteils entlang der Schnittebene IX-IX aus Fig. 7;
Fig. 10 zeigt eine Seitenansicht des Gewürzmahlwerksteils gemäß der zweiten Ausführungsform;
Fig. 11 zeigt einen Mahlring und ein Aufnahmeelement in einer Detailansicht im Querschnitt;
Fig. 12 zeigt einen Mahlring in einer Seitenansicht; und
Fig. 13 zeigt einen Querschnitt einer Gewürzmühle.

Im Folgenden werden zwei Ausführungsformen der Erfindung näher beschrieben. Zunächst wird die erste und anschließend die zweite Ausführungsform erläutert.

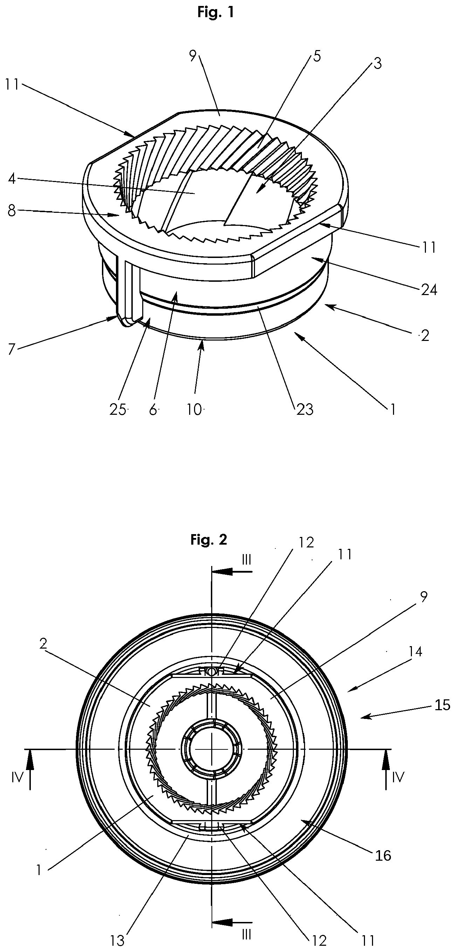

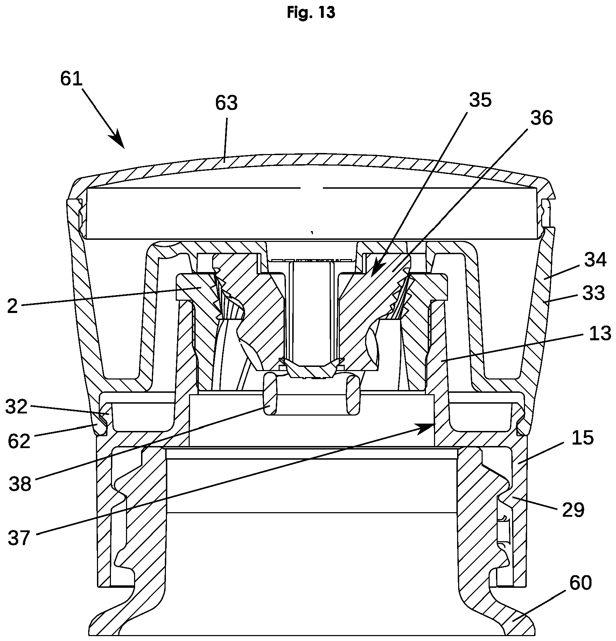

Fig. 1 zeigt ein Mahlelement 1 in Form eines Mahlringes 2 aus einem Keramikmaterial. Das Mahlelement 1 besitzt an der Innenseite Mahlvorsprünge 3, welche mit Mahlvorsprüngen eines weiteren Mahlelements, beispielsweise eines Mahlkonus (nicht gezeigt, siehe Fig. 13), zusammenwirken können, um ein Mahlgut in einem zwischen den beiden Mahlelementen befindlichen Mahlspalt zu mahlen. Der gezeigte Mahlring 2 besitzt an seiner Innenseite zwei unterschiedliche Arten von Mahlvorsprüngen 3, nämlich grobe Mahlvorsprünge 4 zur Grobmahlung und feine Mahlvorsprünge 5 zur Feinmahlung.

An seiner Außenseite besitzt der Mahlring 2 eine in sich geschlossene äußere Anlagefläche 6 sowie zumindest einen Vorsprung 7, welcher den Mahlring 2 an der Stelle verdickt. An einem oberen Rand 8 weist der Mahlring 2 einen nach außen abstehenden Kragen 9 auf. Der Vorsprung 7 schließt an den Kragen 9 an und erstreckt sich in der gezeigten Ausführung bis zu einem unteren Rand 10 des Mahlrings 2 und damit im Wesentlichen über die gesamte Höhe der äußeren Anlagefläche 6. Der Kragen 9 verläuft entlang des oberen Randes 8 und besitzt an zwei gegenüberliegenden Seiten jeweils eine Abflachung 11, welche mit Blockierelementen 12 eines Aufnahmeelements 13 zusammenwirken kann, um so den Mahlring 2 in dem Aufnahmeelement 13 gegen Verdrehungen zu sichern (siehe Fig. 2).

Fig. 2 zeigt eine Draufsicht auf ein Gewürzmahlwerksteil 14 in Form eines Gewürzmahlwerksunterteils 15 in einer ersten Ausführungsform. Erkennbar ist, dass der Mahlring 2 aus Fig. 1 in dem Aufnahmeelement 13 eingefügt ist. Weiters ist zu erkennen, dass die Abflachungen 11 des Kragens 9 mit den Blockierelementen 12 des Aufnahmeelements 13 zusammenwirken, um so eine Verdrehsicherung zu erzielen.

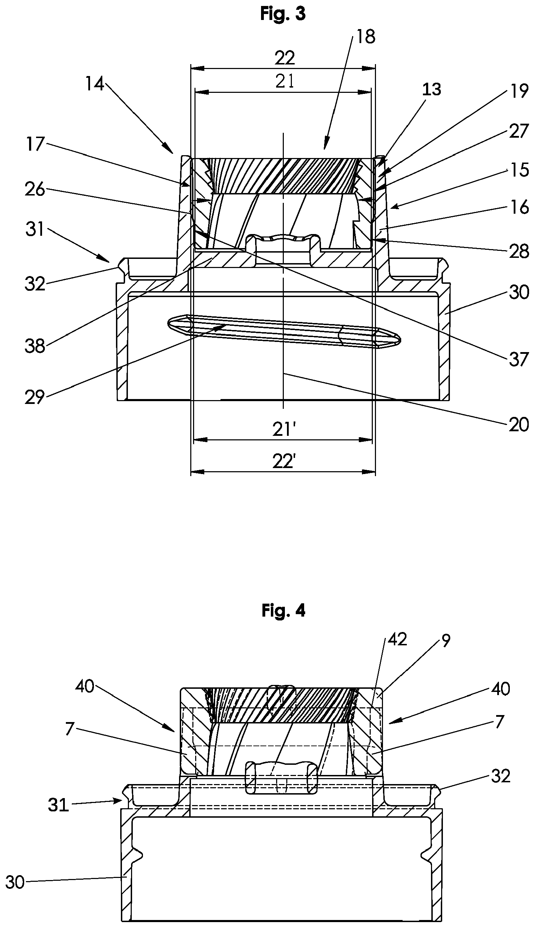

Fig. 3 zeigt das Gewürzmahlwerksunterteil 15 im Querschnitt entlang der Schnittebene III-III aus Fig. 2. Der Gewürzmahlwerksunterteil 15 weist ein Gehäuse 16 aus einem Kunststoffmaterial mit einem Aufnahmeelement 13 auf, welches eine innere Anlagefläche 17 aufweist und in welches der Mahlring 2 aus Fig. 1 in der gezeigten Darstellung kraftschlüssig eingefügt ist. Zum Einfügen des Mahlringes 2 besitzt das Aufnahmeelement oberseitig eine Einführöffnung 18. Der Kraftschluss entsteht durch die von einer Wandung 19 des Aufnahmeelements 13 auf den Mahlring 2 wirkende Druckkraft (durch Pfeile verdeutlicht). Die Druckkraft wirkt dabei radial nach innen auf die äußere Anlagefläche 6 des Mahlringes 2 zu einer zentralen Längsachse 20 des Gewürzmahlwerksteils 14 hin. Durch die Krafteinwirkung bzw. innige Aufnahme des Mahlrings 2 in dem Aufnahmeelement 13 wird die Entstehung bzw. Fortpflanzung von Haarrissen im Mahlring 2 vermieden. Die Druckkraft entsteht, weil das Aufnahmeelement 13 bei der Herstellung einen (Soll-)Innendurchmesser 21, 21' aufweist, der geringer als ein (Soll-)Außendurchmesser 22, 22' des Mahlringes 2 ist. Dies wird durch die überlappenden Querschnitte des Aufnahmeelements 13 und des Mahlringes 2 verdeutlicht. Mit anderen Worten: Der Mahlring 2 ist in einem Anlagebereich im Querschnitt größer als der Innendurchmesser des Aufnahmeelements 13. Durch Einfügen des Mahlrings 2 in das Aufnahmeelement 13 wird das Aufnahmeelement 13 geweitet. Durch die rückstellende Kraft des Materials des Aufnahmeelements 13 wirkt die Druckkraft auf die äußere Anlagefläche 6 des Mahlringes 2. Die Druckkraft wirkt im Wesentlichen entlang des gesamten Umfangs der äußeren Anlagefläche 6. Die Wandung 19 ist im Wesentlichen zylindermantelförmig und besitzt daher eine in Draufsicht betrachtet runde Innenkontur. Auch die äußere Anlagefläche 6 des Mahlringes 2 ist im Wesentlichen rund.

In den Fig. 1 und Fig. 3 ist erkennbar, dass die äußere Anlagefläche 6 des Mahlrings 2 eine umlaufende Abstufung 23 besitzt. Die umlaufende Abstufung 23 des Mahlringes 2 kann beispielsweise durch eine geneigte Fläche gebildet sein. Dadurch wird die äußere Anlagefläche 6 in einen oberen Bereich 24 und einen unteren Bereich 25 mit jeweils unterschiedlichen Außendurchmessern unterteilt. Weiters ist erkennbar, dass auch das Aufnahmeelement 13 an der inneren Anlagefläche 17 eine umlaufende Abstufung 26 aufweist, welche das Aufnahmeelement 13 ebenfalls in einen oberen Bereich 27 und einen unteren Bereich 28 mit jeweils unterschiedlichen Innendurchmessern teilt. Die umlaufende Abstufung 26 des Aufnahmeelements 13 kann beispielsweise durch eine geneigte Fläche gebildet sein. Der untere Bereich 25 des Mahlrings 2 weist einen im Vergleich zum oberen Bereich 24 des Mahlringes geringeren Außendurchmesser auf. Beispielsweise kann der Außendurchmesser 22 im oberen Bereich 24 des Mahlrings 2 im Wesentlichen 23,5 mm und der Außendurchmesser 22' im unteren Bereich 25 des Mahlrings 2 im Wesentlichen 22,7 mm betragen. Der untere Bereich 28 des Aufnahmeelements 13 weist einen im Vergleich zum oberen Bereich 27 des Aufnahmeelements 13 geringeren Innendurchmesser auf. Beispielsweise kann vor der Einfügung des Mahlelements 1 der Innendurchmesser 21 im oberen Bereich 27 des Aufnahmeelements 13 im Wesentlichen 23,0 mm und der Innendurchmesser 21' im unteren Bereich 28 des Aufnahmeelements 13 im Wesentlichen 22,4 mm betragen. Durch das Einfügen werden die Innendurchmesser des Aufnahmeelements 13 aufgeweitet. Der obere Bereich 24 des Mahlrings 2 liegt am oberen Bereich 27 des Aufnahmeelements 13 an. Der untere Bereich 25 des Mahlrings 2 liegt am unteren Bereich 28 des Aufnahmeelements 13 an. Durch diese Ausgestaltung kann der Mahlring 2 in das Aufnahmeelement 13 zunächst ohne Aufbringung einer einpressenden Druckkraft oder mit nur geringer einpressenden Druckkraft eingesetzt werden. Nach Überführen der jeweils beiden lose miteinander verbundenen Teile in eine Presse, werden üblicherweise eine Vielzahl von Mahlringen 2, z.B. bis zu 24 Mahlringen, unter Aufbringung einer Druckraft von ca. 30 bis 100 kg pro Mahlring in das jeweilige Aufnahmeelement 13 zugleich eingepresst. Die Gesamteinpresskraft der Presse ist üblicherweise auf ca. 5.000 kg ausgelegt.

In Fig. 3 ist erkennbar, dass das Gewürzmahlwerksunterteil 15 ein Gewinde 29 zur Verbindung mit einem Gewürzbehälter 60 (siehe Fig. 13) aufweist. Das Gewinde 29 befindet sich an der Innenseite eines Anschlusselements 30, an dessen Oberseite das Aufnahmeelement 13 angeordnet ist. Darüber hinaus ist an einem oberen Rand 31 des Anschlusselements 30 ein umlaufender Schnappvorsprung 32 zur drehbaren Verbindung mit einem weiteren Gewürzmahlwerksteil 33 in Form eines Gewürzmahlwerksoberteils 34 (siehe Fig. 13) vorgesehen. Um den Mahlring 2 im Aufnahmeelement 13 zu stützen und/oder ein zu tiefes Eindringen eines weiteren Mahlelements 35, beispielsweise eines Mahlkonus 36, an dem Gewürzmahlwerksoberteil 34, zu verhindern, ist bei dem gezeigten Ausführungsbeispiel an der Innenseite 37 des Aufnahmeelements 13 ein Abstützvorsprung 38 ausgebildet, welcher sich im Wesentlichen senkrecht zu der Innenseite 37 des Aufnahmeelements 13 radial nach innen erstreckt.

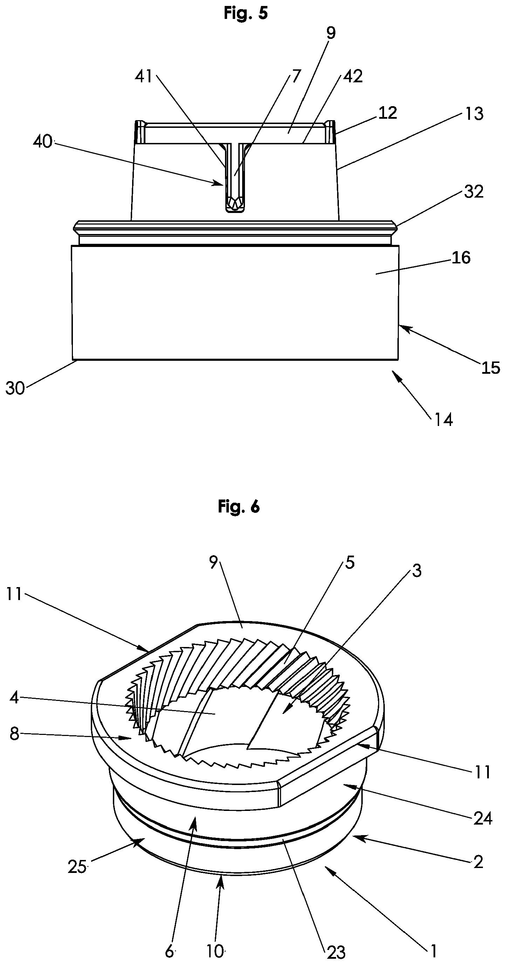

Fig. 4 zeigt eine Querschnittsdarstellung des Gewürzmahlwerksteils 14 gemäß der ersten Ausführungsform. Der Querschnitt entspricht der Schnittebene IV-IV aus Fig. 2. Es ist erkennbar, dass zwei Vorsprünge 7 auf gegenüberliegenden Seiten des Mahlelements 1 jeweils in Spreizausnehmungen 40 des Aufnahmeelements 13 (vgl. Fig. 5) eingeführt sind. Zudem ist erkennbar, dass der Kragen 9 an einem oberen Rand 42 des Aufnahmeelements 13 anliegt.

Fig. 5 zeigt eine Seitenansicht des Gewürzmahlwerksunterteils 15 gemäß der ersten Ausführungsform. Hierbei weist das Aufnahmeelement 13 zumindest eine Spreizausnehmung 40 in Form eines Schlitzes 41 auf. Die gezeigte Spreizausnehmung 40 verläuft von einem oberen Rand 42 des Aufnahmeelements 13 nach unten und ermöglicht ein Aufspreizen des Aufnahmeelements 13 zum Einführen des Mahlringes 2. Zudem kann ein Vorsprung 7 des Mahlringes 2 in die Spreizausnehmung 40 eingeführt sein (vgl. Fig. 4). Zweckmäßigerweise kann hierzu der Vorsprung 7 im Wesentlichen die gleiche Kontur aufweisen wie die Spreizausnehmung 40.

Fig. 6 zeigt einen Mahlring 2 gemäß einer zweiten Ausführungsform, welcher sich von der ersten Ausführungsform dadurch unterscheidet, dass keine Vorsprünge 7 vorgesehen sind.

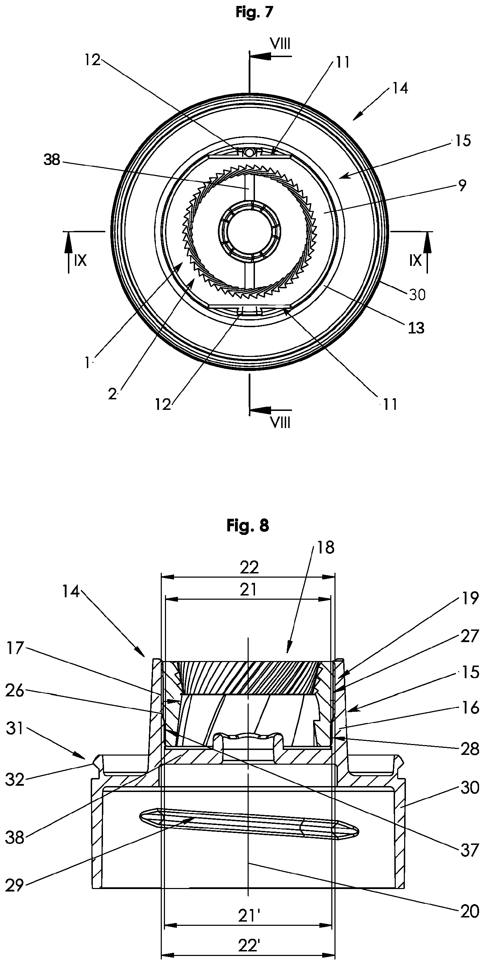

Fig. 7 zeigt eine Draufsicht auf ein Gewürzmahlwerksteil 14 in Form eines Gewürzmahlwerksunterteils 15 gemäß einer zweiten Ausführungsform.

Fig. 8 zeigt das Gewürzmahlwerksunterteils 15 im Querschnitt entlang der Schnittebene VIII-VIII aus Fig. 7.

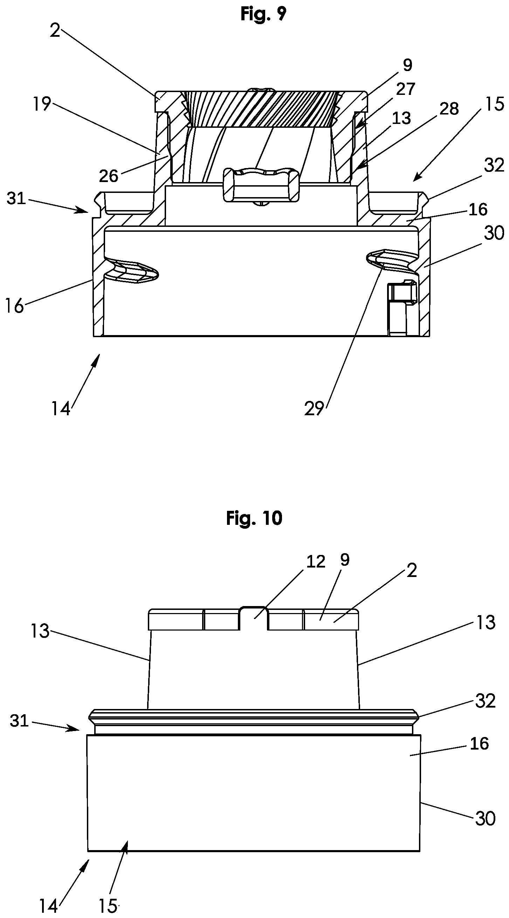

Fig. 9 zeigt das Gewürzmahlwerksunterteil 15 im Querschnitt entlang der Schnittebene IX-IX aus Fig. 7. Es ist erkennbar, dass im Unterschied zur ersten Ausführungsform der Mahlring 2 keine Vorsprünge 7 aufweist, die in Spreizausnehmungen 40 (welche bei dieser Ausführungsform ebenfalls nicht vorgesehen sind) aufnehmbar wären. Nach der Herstellung, wenn das Gewürzmahlwerksteil 14 noch nicht auf Raumtemperatur abgekühlt ist, ist das Aufnahmeelement 13 (noch) umfangsgrößer. Die größere Ausdehnung des Aufnahmeelements 13 kann genutzt werden, um das Mahlelement 1 in das Aufnahmeelement 13 einzuführen bzw. einzupressen. Mit der Abkühlung des Gewürzmahlwerksteils 14 setzt der Schwund des Materials ein, mit welchem sich der Innendurchmesser des Aufnahmeelements 13 verringert, sodass das Mahlelement 1 kraftschlüssig eingespannt wird. Spreizausnehmungen 40 sind daher nicht notwendig.

Fig. 10 zeigt eine Seitenansicht des Gewürzmahlwerksunterteils 15 gemäß der zweiten Ausführungsform. Hierbei ist die Wandung 19 des Aufnahmeelements 13 umfangsseitig vollständig geschlossen, d.h. frei von Öffnungen und Ausnehmungen, wie etwa Spreizausnehmungen 40 etc.

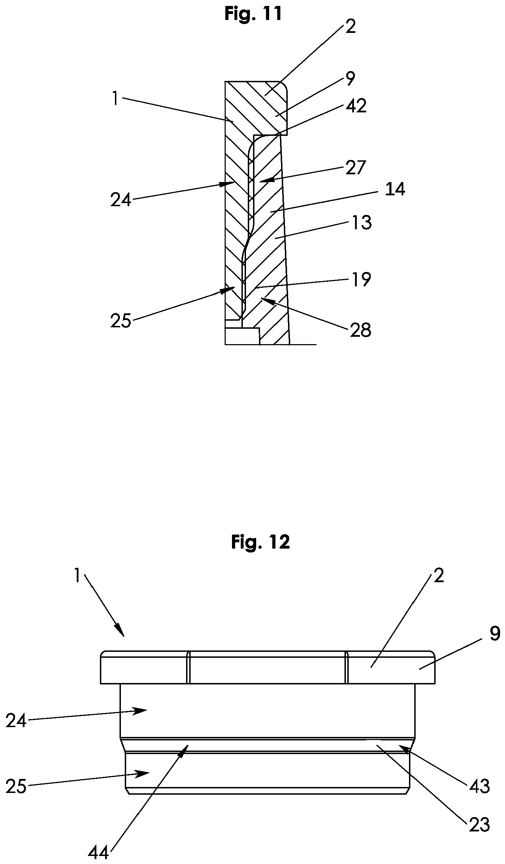

Fig. 11 zeigt einen Mahlring 2 mit Außendurchmessern 22, 22' (siehe Fig. 3 bzw. Fig. 8) und ein Aufnahmeelement 13 mit Innendurchmessern 21, 21' (siehe Fig. 3 bzw. Fig. 8) in einer Detailansicht. Die folgenden Erläuterungen gelten für beide Ausführungsformen des Gewürzmahlwerksteils 14. Das Aufnahmeelement 13 liegt im nicht aufgeweiteten Zustand, in welchem das Mahlelement 1 noch nicht eingefügt ist, vor. Die Querschnitte des Mahlelements 1 und des Aufnahmeelements 13 sind zur Veranschaulichung der Unterschiede zwischen den jeweiligen Durchmessern überlappend dargestellt. Die Aufweitung des Aufnahmeelements 13 im zusammengesetzten Zustand des Gewürzmahlwerksteils 14 findet statt, weil die Außendurchmesser 22, 22' des Mahlelements 1 im oberen 24 und im unteren Bereich 25 größer sind als die entsprechenden Innendurchmesser 21, 21' des Aufnahmeelements 13 im oberen 27 bzw. unteren Bereich 28. Der Unterschied zwischen den Innendurchmessern 21, 21' des Aufnahmeelements 13 und den Außendurchmessern 22, 22' des Mahlelements 1 kann, wie in der gezeigten Darstellung, beispielsweise im Wesentlichen 0,5 mm betragen. Durch das Einführen des Mahlelements 1 in das Aufnahmeelement wird daher in diesem Beispiel die Wandung 19 des Aufnahmeelements 13 in beiden Bereichen 27, 28 um ca. 0,25 mm nach außen gedrückt.

Fig. 12 zeigt eine Seitenansicht eines Mahlringes 2. Der gezeigte Mahlring 2 besitzt keinen Vorsprung 7 und entspricht der zweiten Ausführungsform. Die folgenden Aussagen sind auch auf den Mahlring 2 gemäß der ersten Ausführungsform übertragbar. In Fig. 12 ist erkennbar, dass der Mahlring 2 zwischen dem oberen Bereich 24 und dem unteren Bereich 25 als Abstufung 23 einen konisch zusammenlaufenden Übergangsbereich 43 aufweist. Der Übergangsbereich 43 ist in der gezeigten Darstellung durch eine geneigte Übergangsfläche 44 gebildet. Die Übergangsfläche 44 ist im Vergleich zur Fläche des oberen Bereichs 25 um mehr als 10°, bevorzugt um mehr als 15°, insbesondere im Wesentlichen 20°, geneigt.

Fig. 13 zeigt einen oberen Ausschnitt aus einer zusammengesetzten Gewürzmühle 61. Das Gewürzmahlwerksunterteil 15 ist über das Gewinde 29 mit dem Gewürzbehälter 60 verbunden. Das Gewürzmahlwerksoberteil 34 weist einen umlaufenden Schnappvorsprung 62 auf, der auf den umlaufenden Schnappvorsprung 32 des Gewürzmahlwerksunterteils 15 aufgeschnappt werden kann. Das Gewürzmahlwerksoberteil 34 und das Gewürzmahlwerksunterteil 15 sind drehbar miteinander verbunden. Mit dem Gewürzmahlwerksoberteil 34 ist eine Kappe 63 abnehmbar verbunden.

## Patentansprüche

1. Gewürzmahlwerksteil (14), insbesondere Gewürzmahlwerksunterteil (15), für ein Gewürzmahlwerk, mit einem Gehäuse (16), welches zumindest teilweise aus einem Kunststoffmaterial besteht und mit einem weiteren Gewürzmahlwerksteil (33), insbesondere einem Gewürzmahlwerksoberteil (34), drehbar verbindbar ist, wobei an dem Gehäuse (16) ein Aufnahmeelement (13) vorgesehen ist, in welchem ein Mahlelement (1), insbesondere ein Mahlring (2), aus einem Keramikmaterial angeordnet ist, **dadurch gekennzeichnet, dass** das Mahlelement (1) kraftschlüssig durch eine im Wesentlichen radial nach innen gerichtete und auf eine in sich geschlossene äußere Anlagefläche (6) des Mahlelements (1) wirkende Druckkraft in dem Aufnahmeelement (13) eingespannt ist, wobei die Druckkraft im Wesentlichen entlang des gesamten Umfangs auf die äußere Anlagefläche (6) des Mahlelements (1) wirkt.

2. Gewürzmahlwerksteil (14) nach Anspruch 1, **dadurch gekennzeichnet, dass** das Aufnahmeelement (13) zumindest eine, vorzugsweise zwei insbesondere gegenüberliegende, Spreizausnehmung/n (40) zum zumindest teilweisen Aufspreizen des Aufnahmeelements (13) aufweist.

3. Gewürzmahlwerksteil (14) nach einem der Ansprüche 1 oder 2, **dadurch gekennzeichnet, dass** das Aufnahmeelement (13) an einer inneren Anlagefläche (17) eine insbesondere umlaufende Abstufung (26) aufweist und/oder dass die äußere Anlagefläche (6) des Mahlelements (1) eine insbesondere umlaufende Abstufung (23) besitzt.

4. Gewürzmahlwerksteil (14) nach einem der Ansprüche 1 bis 3, **dadurch gekennzeichnet, dass** das Mahlelement (1) an der äußeren Anlagefläche (6) zumindest einen sich vorzugsweise über die gesamte Höhe der äußeren Anlagefläche (6) erstreckenden Vorsprung (7) aufweist.

5. Gewürzmahlwerksteil (14) nach Anspruch 4 in Rückbeziehung auf Anspruch 2, **dadurch gekennzeichnet, dass** der Vorsprung (7) im Wesentlichen die gleiche Kontur aufweist, wie die Spreizausnehmung (40), und vorzugsweise der Vorsprung (7) im Wesentlichen entsprechend eines oberen Kragens (9) von der äußeren Anlagefläche (6) vorsteht.

6. Gewürzmahlwerksteil (14) nach einem der Ansprüche 1 bis 5, **dadurch gekennzeichnet, dass** der Solldurchmesser der inneren Anlagefläche (17) des Aufnahmeelements (13) bei seiner Herstellung derart gewählt ist, dass er zwischen 1 % und 3 %, bevorzugt zwischen 1,5 % und 2,5 % , noch mehr bevorzugt im Wesentlichen 2 % kleiner ist als der Solldurchmesser der äußeren Anlagefläche (6) des Mahlelements (1).

7. Gewürzmahlwerksteil (14) nach einem der Ansprüche 1 bis 6, **dadurch gekennzeichnet, dass** unter Berücksichtigung der Fertigungstoleranzen von Aufnahmeelement (13) und Mahlelement (1) der größtmögliche Durchmesser einer inneren Anlagefläche (17) des Aufnahmeelements (13) im Wesentlichen dem kleinstmöglichen Durchmesser der äußeren Anlagefläche (6) des Mahlelements (1) entspricht.

8. Gewürzmahlwerksteil (14) nach einem der Ansprüche 1 bis 7, **dadurch gekennzeichnet, dass** das Aufnahmeelement (13) an einer Innenseite (37) einen Abstützvorsprung (38) für das Mahlelement (1) ausbildet, welcher sich im Wesentlichen senkrecht zu der Innenseite (37) des Aufnahmeelements (13) radial nach innen erstreckt.

9. Gewürzmahlwerksteil (14) nach einem der Ansprüche 1 bis 8, **dadurch gekennzeichnet, dass** das Gehäuse (16) aus Polyoxymethylene, Polycarbonat, Polypropylen, ABS (Acrylnitril-Butadien-Styrol-Copolymere), Polymethylmethacrylat, Polyethylen, Polyolefin und/oder Biopolymeren besteht.

10. Gewürzmahlwerksteil (14) nach einem der Ansprüche 1 bis 9, **dadurch gekennzeichnet, dass** ein Gewinde (29) zur Verbindung mit einem Gewürzbehälter vorgesehen ist.

11. Gewürzmahlwerksteil (14) nach einem der Ansprüche 1 bis 10, **dadurch gekennzeichnet, dass** ein vorzugsweise umlaufender Schnappvorsprung (32) zur Verbindung mit dem weiteren Gewürzmahlwerksteil (33) vorgesehen ist.

12. Gewürzmahlwerk für eine Gewürzmühle, **dadurch gekennzeichnet, dass** ein Gewürzmahlwerksunterteil (15) nach einem der Ansprüche 1 bis 11 vorgesehen ist, welches über eine Schnappverbindung mit einem Gewürzmahlwerksoberteil (34) drehbar verbunden ist, wobei das Gewürzmahlwerksoberteil (34) ein weiteres Mahlelement (35), insbesondere einen Mahlkonus (36), aufweist.

13. Gewürzmühle mit einem Gewürzbehälter und einem Gewürzmahlwerk, **dadurch gekennzeichnet, dass** das Gewürzmahlwerk gemäß Anspruch 12 ausgebildet ist.

14. Verfahren zur Herstellung eines Gewürzmahlwerksteils (14), insbesondere eine Gewürzmahlwerksunterteil (15), für eine Gewürzmühle mit den folgenden Schritten:
- Herstellen eines Mahlelements (1), insbesondere eines Mahlringes (2), bestehend aus einem Keramikmaterial;
- Herstellen eines Gehäuses (16) mit einem Aufnahmeelement (13) für das Mahlelement (1) durch ein Kunststoffspritzgießverfahren;
- Einfügen des Mahlelements (1) in das Aufnahmeelement (13), sodass das Mahlelement (1) kraftschlüssig durch eine im Wesentlichen radial nach innen gerichtete und auf eine in sich geschlossene äußere Anlagefläche (6) des Mahlelements (1) wirkende Druckkraft in dem Aufnahmeelement (13) eingespannt ist.

15. Verfahren nach Anspruch 14, **dadurch gekennzeichnet, dass** das Mahlelement (1) in das Aufnahmeelement (13) eingefügt wird, bevor das Aufnahmeelement (13) auf Raumtemperatur, insbesondere unter 35 °C, abgekühlt ist, oder dass das Aufnahmeelement (13) zumindest eine Spreizausnehmung (40) aufweist und das Aufnahmeelement (13) zum Einfügen des Mahlelements (1) aufgespreizt wird.

## Claims

1. Spice mill part (14), in particular a spice mill lower part (15), for a spice mill, with a housing (16), which at least partially consists of a plastic material, and can be rotatably connected to another spice mill part (33), in particular a spice mill upper part (34), a receiving element (13) being provided on the housing (16), in which receiving element a milling element (1), in particular a milling ring (2), made of a ceramic material is arranged, **characterised in that** the milling element (1) is clamped in the receiving element (13) in a force-locking manner by a compressive force which is directed substantially radially inward and which acts on a closed outer bearing face (6) of the milling element (1), the compressive force acting on the outer bearing face (6) of the milling element (1) substantially along the entire circumference.

2. Spice mill part (14) according to claim 1, **characterised in that** the receiving element (13) has at least one, preferably two, opposing spreader recess(es) (40) for at least partial spreading apart of the receiving element (13).

3. Spice mill part (14) according to either claim 1 or claim 2, **characterised in that** the receiving element (13) has, on an inner bearing face (17), an in particular circumferential step (26), **and/or in that** the outer bearing face (6) of the milling element (1) has an in particular circumferential step (23).

4. Spice mill part (14) according to any of claims 1 to 3, **characterised in that** the milling element (1) has at least one projection (7) on the outer bearing face (6) which preferably extends over the entire height of the outer bearing face (6).

5. Spice mill part (14) according to claim 4 when dependent on claim 2, **characterised in that** the projection (7) has substantially the same contour as the spreader recess (40), and the projection (7) preferably protrudes from the outer bearing face (6) substantially in accordance with an upper collar (9).

6. Spice mill part (14) according to any of claims 1 to 5, **characterised in that** the nominal diameter of the inner bearing face (17) of the receiving element (13) is selected such that it is between 1% and 3%, preferably between 1.5% and 2.5%, even more preferably substantially 2%, smaller than the nominal diameter of the outer bearing face (6) of the milling element (1).

7. Spice mill part (14) according to any of claims 1 to 6, **characterised in that,** taking into account the manufacturing tolerances of the receiving element (13) and the milling element (1), the largest possible diameter of an inner bearing face (17) of the receiving element (13) substantially corresponds to the smallest possible diameter of the outer bearing face (6) of the milling element (1).

8. Spice mill part (14) according to any of claims 1 to 7, **characterised in that** the receiving element (13) forms, on an inner face (37), a supporting projection (38) for the milling element (1), which projection extends radially inwards substantially perpendicularly to the inner face (37) of the receiving element (13).

9. Spice mill part (14) according to any of claims 1 to 8, **characterised in that** the housing (16) consists of polyoxymethylene, polycarbonate, polypropylene, ABS (acrylonitrile-butadiene-styrene copolymers), polymethyl methacrylate, polyethylene, polyolefin and/or biopolymers.

10. Spice mill part (14) according to any of claims 1 to 9, **characterised in that** a thread (29) is provided for connection to a spice container.

11. Spice mill part (14) according to any of claims 1 to 10, **characterised in that** a preferably circumferential snap-on projection (32) is provided for connection to the other spice mill part (33).

12. Spice mill for a spice grinder, **characterised in that** a spice mill lower part (15) according to any of claims 1 to 11 is provided, which is rotatably connected to a spice mill upper part (34) via a snap-on connection, the spice mill upper part (34) having another milling element (35), in particular a milling cone (36).

13. Spice grinder having a spice container and a spice mill, **characterised in that** the spice mill is designed according to claim 12.

14. Method for producing a spice mill part (14), in particular a spice mill lower part (15), for a spice grinder, with the following steps:
- producing a milling element (1), in particular a milling ring (2), consisting of a ceramic material;
- producing a housing (16) having a receiving element (13) for the milling element (1) by means of a plastics injection-moulding process;
- inserting the milling element (1) into the receiving element (13), so that the milling element (1) is clamped in the receiving element (13) in a force-locking manner by a compressive force which is directed substantially radially inward and which acts on a closed outer bearing face (6) of the milling element (1).

15. Method according to claim 14, **characterised in that** the milling element (1) is inserted into the receiving element (13) before the receiving element (13) has cooled down to room temperature, in particular below 35°C, **or in that** the receiving element (13) has at least one spreader recess (40) and the receiving element (13) is spread apart for the insertion of the grinding element (1).

## Revendications

1. Partie de broyeur à épices (14), en particulier partie inférieure de broyeur à épices (15), pour un broyeur à épices, avec un boîtier (16), qui consiste au moins en partie en une matière plastique et pouvant être reliée en rotation avec une autre partie de broyeur à épices (33), en particulier une partie supérieure de broyeur à épices (34), où un élément de réception (13) est prévu sur le boîtier (16), dans lequel un élément de mouture (1), en particulier un anneau de mouture (2), en un matériau céramique, est disposé, **caractérisée en ce que** l'élément de mouture (1) est serré par assemblage par force dans l'élément de réception (13) par une force de compression dirigée sensiblement radialement vers l'intérieur et agissant sur une surface de contact externe (6) fermée sur elle-même de l'élément de mouture (1), où la force de compression agit sensiblement le long de toute la circonférence sur la surface de contact externe (6) de l'élément de mouture (1).

2. Partie de broyeur à épices (14) selon la revendication 1, **caractérisée en ce que** l'élément de réception (13) présente au moins un, de préférence deux évidements d'expansion (40), en particulier opposés, pour l'expansion au moins partielle de l'élément de réception (13).

3. Partie de broyeur à épices (14) selon l'une des revendications 1 ou 2, **caractérisée en ce que** l'élément de réception (13) présente sur une surface de contact interne (17) une gradation en particulier circonférentielle (26) et/ou **en ce que** la surface de contact externe (6) de l'élément de mouture (1) possède une gradation en particulier circonférentielle (23).

4. Partie de broyeur à épices (14) selon l'une des revendications 1 à 3, **caractérisée en ce que** l'élément de mouture (1) présente sur la surface de contact externe (6) au moins une saillie (7) qui s'étend de préférence sur toute la hauteur de la surface de contact externe (6).

5. Partie de broyeur à épices (14) selon la revendication 4 en relation avec la revendication 2, **caractérisée en ce que** la saillie (7) présente sensiblement le même contour que l'évidement d'expansion (40), et de préférence la saillie (7) dépasse de la surface de contact externe (6) sensiblement conformément à un collet supérieur (9).

6. Partie de broyeur à épices (14) selon l'une des revendications 1 à 5, **caractérisée en ce que** le diamètre cible de la surface de contact interne (17) de l'élément de réception (13) est choisi lors de sa fabrication de telle sorte qu'il est entre 1 % et 3 %, de préférence entre 1,5 % et 2,5 %, de préférence encore de sensiblement 2 % plus petit que le diamètre cible de la surface de contact externe (6) de l'élément de mouture (1).

7. Partie de broyeur à épices (14) selon l'une des revendications 1 à 6, **caractérisée en ce que**, compte tenu des tolérances de fabrication de l'élément de réception (13) et de l'élément de mouture (1), le plus grand diamètre possible d'une surface de contact interne (17) de l'élément de réception (13) correspond sensiblement au plus petit diamètre possible de la surface de contact externe (6) de l'élément de mouture (1).

8. Partie de broyeur à épices (14) selon l'une des revendications 1 à 7, **caractérisée en ce que** l'élément de réception (13) forme sur un côté interne (37) une saillie de support (38) pour l'élément de mouture (1), qui s'étend radialement vers l'intérieur sensiblement perpendiculairement au côté interne (37) de l'élément de réception (13).

9. Partie de broyeur à épices (14) selon l'une des revendications 1 à 8, **caractérisée en ce que** le boîtier (16) consiste en polyoxyméthylène, polycarbonate, polypropylène, ABS (copolymères acrylonitrile-butadiène-styrène), polyméthacrylate de méthyle, polyéthylène, polyoléfine et/ou biopolymères.

10. Partie de broyeur à épices (14) selon l'une des revendications 1 à 9, **caractérisée en ce qu'**un filetage (29) est prévu pour la liaison avec un récipient à épices.

11. Partie de broyeur à épices (14) selon l'une des revendications 1 à 10, **caractérisée en ce qu'**une saillie d'encliquetage (32) de préférence circonférentielle est prévue pour la liaison avec l'autre partie de broyeur à épices (33).

12. Broyeur à épices pour un moulin à épices, **caractérisé en ce qu'**il est prévu une partie inférieure de broyeur à épices (15) selon l'une des revendications 1 à 11, qui est reliée en rotation à une partie supérieure de broyeur à épices (34) par l'intermédiaire d'une liaison par encliquetage, où la partie supérieure de broyeur à épices (34) présente un autre élément de mouture (35), en particulier un cône de mouture (36).

13. Moulin à épices avec un récipient à épices et un broyeur à épices, **caractérisé en ce que** le broyeur à épices est conçu selon la revendication 12.

14. Procédé de fabrication d'une partie de broyeur à épices (14), en particulier une partie inférieure de broyeur à épices (15), pour un moulin à épices avec les étapes suivantes:
- fabrication d'un élément de mouture (1), en particulier d'un anneau de mouture (2), consistant en un matériau céramique;
- fabrication d'un boîtier (16) avec un élément de réception (13) pour l'élément de mouture (1) par un procédé de moulage par injection de matière plastique;
- insertion de l'élément de mouture (1) dans l'élément de réception (13), de sorte que l'élément de mouture (1) est serré par assemblage par force dans l'élément de réception (13) par une force de compression dirigée sensiblement radialement vers l'intérieur et agissant sur une surface de contact externe (6) fermée sur elle-même de l'élément de mouture (1).

15. Procédé selon la revendication 14, **caractérisé en ce que** l'élément de mouture (1) est inséré dans l'élément de réception (13) avant que l'élément de réception (13) soit refroidi à la température ambiante, en particulier en dessous de 35°C, ou **en ce que** l'élément de réception (13) présente au moins un évidement d'expansion (40) et l'élément de réception (13) est expansé pour l'insertion de l'élément de mouture (1).
